# EUROPÄISCHE PATENTSCHRIFT

(11) **EP 1 206 379 B1**
(45) Veröffentlichungstag und Bekanntmachung des Hinweises auf die Patenterteilung: **17.11.2004**
(21) Anmeldenummer: 00954472.7
(22) Anmeldetag: 12.07.2000
(51) Int. Cl.: B60T 17/02, B60T 17/00, B60T 11/32

(54) **SICHERHEITSEINRICHTUNG FÜR EINE LUFTAUFBEREITUNGSANLAGE EINES FAHRZEUGS**
SAFETY DEVICE FOR AN AUTOMOTIVE PNEUMATIC SYSTEM
DISPOSITIF DE SECURITE POUR INSTALLATION PNEUMATIQUE D'UN VEHICULE AUTOMOBILE

(30) Priorität: 02.08.1999 DE 19936283
(43) Veröffentlichungstag der Anmeldung: 22.05.2002
(73) Patentinhaber: KNORR-BREMSE SYSTEME FÜR NUTZFAHRZEUGE GMBH, 80809 München (DE)
(72) Erfinder: HILBERER, Eduard, D-68766 Hockenheim (DE)
(74) Vertreter: Mattusch, Gundula
(86) Internationale Anmeldenummer: PCT/EP2000/006583
(87) Internationale Veröffentlichungsnummer: WO 2001/008954

(56) Entgegenhaltungen:
- DE-C- 19 649 498
- DE-C- 19 710 814

## Beschreibung

Die Erfindung betrifft eine Sicherheitseinrichtung für eine Luftaufbereitungsanlage eines Fahrzeugs, wobei ein Sicherheitsventil vorgesehen ist, das ein Rückstellelement mit einer einstellbaren Rückstellhraft umfasst, und ein Verfahren zum Sicherheitsbetrieb einer Luftaufbereitungsanlage eines Fahrzeugs, wobei im Normalbetrieb die Komponenten Druckreglerventil, Regenerationsventil und Kreisschutzeinrichtung betätigbar sind und im Sicherheitsbetrieb wenigstens eine der Komponenten ausfällt.

Aus der DE 196 49 498 C1 ist eine Sicherheitseinrichtung für eine Luftaufbereitungsanlage eines Fahrzeugs bekannt, die ein Sicherheitsventil aufweist, das ein Rückstellelement umfasst, wobei die Rückstellkraft des Rückstellelements manuell einstellbar ist. Bei der Sicherheitseinrichtung gem. der DE 196 49 498 C1 ist es nicht möglich, im Betrieb der Druckluftaufbereitungseinrichtung die Rückstellkraft des Rückstellelements einzustellen.

Damit ist der Sicherheitsventildruck dieser Anlage relativ hoch, da diese über dem maximalen Wert des Druckreglers liegen muss. Im stromlosen Betrieb bzw. im Sicherheitsbetrieb kann es also dazu kommen, dass der Kompressor bzw. die Druckmittelquelle gegen einen zu hohen Druck arbeitet, wodurch diese eine kürzere Lebensdauer haben und insbesondere auch Ventileinrichtungen beschädigt werden können.

Aus der US-PS-5 678 900 ist eine Luftaufbereitungsanlage mit einem Druckregler, einer Regenerationseinrichtung und einer Kreisschutzeinrichtung bekannt, bei der ein Sicherheitsventil vorgesehen ist, das zum Auslassen von Druckluft dient, wenn mittels eines Magnetventils im Druckregler der Kolben des Sicherheitsventils betätigt wird.

Derartige Anlagen haben den Nachteil, dass im stromlosen Betrieb der Anlage der Kompressor bzw. die Druckmittelquelle nicht mehr geregelt wird und gegen einen maximalen Druck, nämlich den Sicherheitsventildruck des Druckreglersicherheitsventils arbeiten muss. Da der Sicherheitsventildruck einer gattungsgemäßen Anlage hoch ist, da dieser über dem maximalen Wert des Druckreglers liegen muss, ist dieser zum einen schadhaft für die Kompressoren und zum anderen können Ventileinrichtungen beschädigt werden, die mit dem Sicherheitsventildruck, also dem Druckreglersicherheitsventilausgangsdruck, im stromlosen Betrieb direkt versorgt werden müssen.

Es ist eine Aufgabe der vorliegenden Erfindung, eine Sicherheitseinrichtung für eine Luftaufbereitungsanlage eines Fahrzeugs anzugeben, bei der im stromlosen Betrieb bzw. im Sicherheitsbetrieb, wie zum Beispiel bei elektrischen Fehlern oder bei einem Steckerbruch oder dergleichen, also insbesondere beim Ausfall wenigstens einer Komponente verhindert wird, dass der Kompressor bzw. die Druckmittelquelle gegen einen zu hohen Druck arbeitet, um damit insbesondere den Kompressor bzw. die Druckmittelquelle und Ventileinrichtungen zu schonen. Ferner ist es Aufgabe der vorliegenden Erfindung ein entsprechendes Verfahren anzugeben, mit dem ein Sicherheitsbetrieb möglich ist, bei dem der Kompressor und Ventileinrichtungen geschont werden.

Gelöst wird die Aufgabe durch eine Sicherheitseinrichtung für eine Luftaufbereitungsanlage eines Fahrzeugs, wobei ein Sicherheitsventil vorgesehen ist, das ein Rückstellelement mit einer einstellbaren Rückstellkraft umfasst (Sicherheitseinrichtung nach der DE 19 6 49 498 C1), dadurch gekennzeichnet, daß, die Rückstellkraft des Rückstellelements während des Betriebs der Luftaufbereitungsanlage einstellbar ist. Durch diese erfindungsgemäße Maßnahme ist es möglich, im Sicherheitsbetrieb oder im stromlosen Betrieb der Luftaufbereitungsanlage den Sicherheitsventildruck niedriger einzustellen als den Sicherheitsventildruck im Normalbetrieb bzw. im bestromten Fall.

Wenn vorzugsweise die Rückstellkraft des Rückstellelements mittels eines Drucks und/oder mechanisch einstellbar ist, ist eine einfache bevorzugte Ausführungsform der Erfindung möglich, bei der insbesondere vorhandene Elemente der Luftaufbereitungsanlage verwendbar sind. Vorzugsweise ist der Druck über ein Regenerationsventil einstellbar. Das Regenerationsventil kann beispielsweise so eingestellt sein, dass dieses im Sicherheitsbetrieb bzw. im unbestromten Betrieb einen Teil der Luftaufbereitungsanlage entlüftet und insbesondere den Teil entlüftet, der auf das Rückstellelement einwirkt. Wenn vorzugsweise der Druck über einen Kolben oder eine Membran auf das Rückstellelement wirkt, ist eine besonders einfache Ausführungsform der Erfindung möglich.

Vorzugsweise ist das Rückstellelement eine Feder. Ferner vorzugsweise ist das Sicherheitsventil insbesondere im Normalbetrieb mittels eines Sicherheitsventilkolbens betätigbar.

Vorzugsweise ist eine Luftaufbereitungsanlage für ein Fahrzeug mit einer Sicherheitseinrichtung der oben beschriebenen Art versehen. Ferner vorzugsweise ist ein Fahrzeug mit.der oben beschriebenen Luftaufbereitungsanlage versehen.

Erfindungsgemäß ist ein Verfahren zum Sicherheitsbetrieb einer Luftaufbereitungsanlage eines Fahrzeugs, wobei im Normalbetrieb die Komponenten Druckreglerventil, Regenerationsventil und Kreisschutzeinrichtung betätigbar sind und im Sicherheitsbetrieb wenigstens eine der Komponenten ausfällt (Verfahren nach der DE 196 49 498 C1), dadurch gekennzeichnet, dass im Sicherheitsbetrieb das Rückstellelement des Sicherheitsventils entlastet wird. Durch dieses erfindungsgemäße Verfahren kann auf einfache Art und Weise die Aufgabe gelöst werden, im unbestromten Fall bzw. im Sicherheitsbetrieb die Druckmittelquelle bzw. den Kompressor und die Ventileinrichtungen zu schonen, da so der Betätigungsdruck des Sicherheitsventils, also der Sicherheitsventildruck, geringer einstellbar ist als im Normalbetrieb.

Vorzugsweise wird das Regenerationsventil im Sicherheitsbetrieb abgeschaltet, wodurch die Rückseite eines auf das Rückstellelement wirkenden Mittels entlüftet wird. Dieser vorzugsweise Verfahrensschritt ermöglicht es relativ einfach, das Rückstellelement zu entlasten und damit den Sicherheitsventildruck zu verringern.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigt:

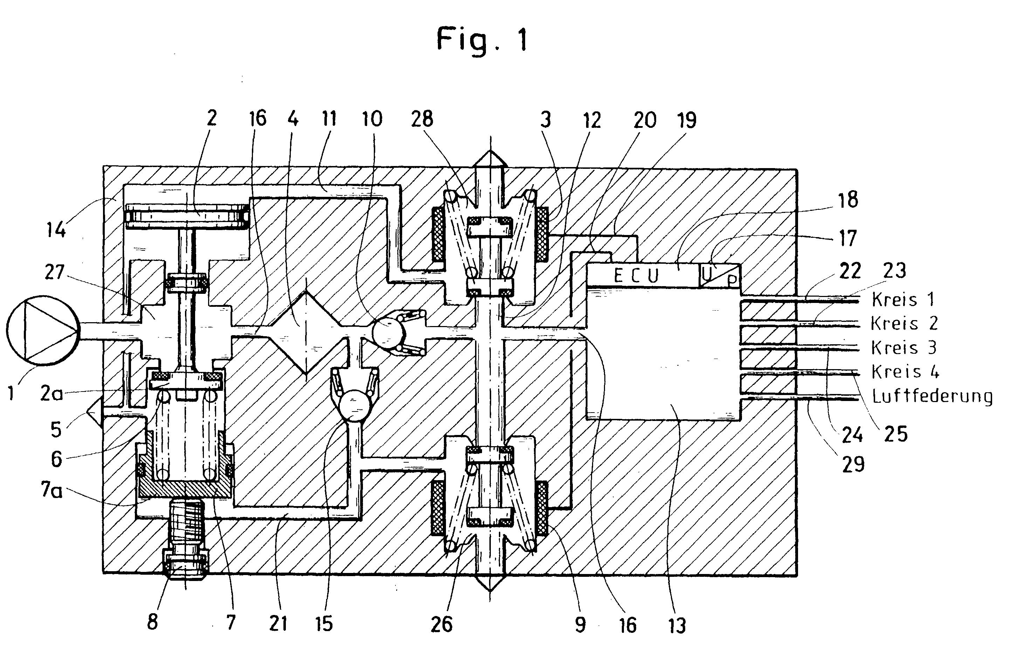

- Fig. 1: eine Schnittdarstellung einer Prinzipskizze einer Luftaufbereitungsanlage gemäß der vorliegenden Erfindung.

Fig. 1 zeigt schematisch in einer Schnittdarstellung eine Luftaufbereitungsanlage, die eine erfindungsgemäße Sicherheitseinrichtung umfasst. Bezüglich der Bezugsziffern wird insbesondere auf die Bezugszeichenliste verwiesen. Eine Druckmittelquelle 1 ist insbesondere ein Kompressor und führt ein Gasgemisch, insbesondere Luft, mit einem Druck von bis zu über 17 bar der Luftaufbereitungsanlage zu, die sich in dem Gehäuse 14 befindet. Der Luftdruck wird über ein Sicherheitsventil 27, eine Zentralversorgungsleitung 16, eine Filtereinheit bzw. eine Trocknerkartusche 4, ein Druckreglerschaltventil 10 und erneut einer Zentralversorgungsleitung 16 einer Kreisschutzeinrichtung 13 zugeführt. Die Kreisschutzeinrichtung 13 ist mit einer Steuerelektronik und wenigstens einem Drucksensor versehen. Von der Kreisschutzeinrichtung 13 werden die Kreise 1, 2, 3, 4 und die Luftfederung über die Anschlüsse 22 bis 25 und den Anschluss 29 versorgt. Elektrische Leitungen 19 und 20 führen von der Steuerelektronik 18 zu einem Druckreglerventilmagnet 3 eines Druckreglerventils 28 und der Versorgung des Magnets 9 eines Regenerationsmagnetventils 26.

In Fig. 1 ist der Fall dargestellt, in dem der Sicherheitsbetrieb stattfindet bzw. der unbestromte Fall. Bei einem unbestromten Fall, d.h. bei elektrischen Fehlern, bei einem Steckerbruch und dergleichen oder ähnlichem oder bei einem Stromausfall, sind die Magnetventile 28 und 26 abgeschaltet. Die Druckreglersteuerleitung 11 wird entlüftet und ferner wird die Sperrleitung 21 entlüftet. Die Sicherheitsventilfeder 6 wird durch Herunterfahren des Sperrkolbens 7 aufgrund dessen, dass an der Kolbenrückseite 7a ein geringerer Druck herrscht, entspannt. Hierdurch verringert sich der Sicherheitsventildruck von vorher, also im Normalbetrieb, beispielsweise 17 bar auf beispielsweise 8,5 bar. Der letzte Wert ist mittels der Einstellschraube 8 einstellbar. Der Sicherheitsventildruck im Normalbetrieb bzw. im bestromten Fall ist insbesondere über den Druck an der Kolbenrückseite 7a bzw. in der Sperrleitung 21 einstellbar. Es ist also durch entsprechende Mittel möglich, den Sicherheitsventildruck im bestromten Fall einzustellen und/oder den Sicherheitsventildruck durch das gleiche Mittel oder ein anderes Mittel im unbestromten Fall einzustellen. Diese Einstellung kann vor und während des Betriebs der Luftaufbereitungsanlage durchgeführt werden.

Die gezeigte Ausführungsform ist besonders deswegen von Vorteil, da das Regenerationsventil 26 bzw. der Regenerationsdruckkreislauf, der das Regenerationsventil 26 und das Regenerationsrückschlagventil 15 umfasst, verwendet wird, ohne dass weitere komplizierte Komponenten benötigt werden würden. Der Druckreglerabschaltdruck liegt beispielsweise bei 12,5 bar in diesem Ausführungsbeispiel. Die Kreisschutzeinrichtung 13 ist beispielsweise ein Kreisschutzventil.

Durch die Erfindung ist es möglich, dass die Druckmittelquelle 1 bzw. der Kompressor 1 im unbestromten Fall gegen einen geringeren Sicherheitsventildruck pumpen muss, wodurch die Lebensdauer des Kompressors bzw. der Druckmittelquelle 1 deutlich erhöht wird. Müsste die Druckmittelquelle 1 über einen längeren Zeitraum auf 17 bar beispielsweise pumpen, würde sehr schnell ein Defekt auftreten. Entsprechendes gilt auch für die weiteren Ventileinrichtungen, die zum Teil keinen so hohen Druck vertragen.

Bei einem teilweisen Stromausfall, beispielsweise bei einem Kabelbruch der elektrischen Leitung 19, wird dieser durch die Steuerelektronik registriert und daraufhin wird dann das Regenerationsventil 26 abgeschaltet.

### Bezugszeichenliste

- 1: Druckmittelquelle
- 2: Sicherheitsventilkolben
- 2a: Sicherheitsventilsitz
- 3: Druckreglerventilmagnet
- 4: Filtereinheit (Trocknerkartusche)
- 5: Entlüftung
- 6: Sicherheitsventilfeder
- 7: Sperrkolben
- 7a: Kolbenrückseite
- 8: Einstellschraube
- 9: Regenerationsventilmagnet
- 10: Druckreglerschaltventil
- 11: Druckreglersteuerleitung
- 12: Steuerversorgungsleitung
- 13: Kreisschutzeinrichtung
- 14: Gehäuse
- 15: Regenerationsrückschlagventil
- 16: Zentralversorgungsleitung
- 17: Drucksensor
- 18: Steuerelektronik
- 19: Elektrische Leitung
- 20: Elektrische Leitung
- 21: Sperrleitung
- 22: Anschluss für Kreis 1
- 23: Anschluss für Kreis 2
- 24: Anschluss für Kreis 3
- 25: Anschluss für Kreis 4
- 26: Regenerationsventil
- 27: Sicherheitsventil
- 28: Druckreglerventil
- 29: Anschluss für die Luftfederung

## Patentansprüche

1. Sicherheitseinrichtung für eine Luftaufbereitungsanlage eines Fahrzeugs, wobei ein Sicherheitsventil (27) vorgesehen ist, das ein Rückstellelement (6) mit einer einstellbaren Rückstellkraft umfasst, **dadurch gekennzeichnet, dass** die Rückstellkraft des Rückstellelements (6) während des Betriebs der Luftaufbereitungsanlage einstellbar ist.

2. Sicherheitseinrichtung nach Anspruch 1, **dadurch gekennzeichnet, dass** die Rückstellkraft des Rückstellelements (6) mittels eines Drucks und/oder mechanisch einstellbar ist.

3. Sicherheitseinrichtung nach Anspruch 2, **dadurch gekennzeichnet, dass** der Druck über ein Regenerationsventil (26) einstellbar ist.

4. Sicherheitseinrichtung nach einem oder mehreren der Ansprüche 1 bis 3, **dadurch gekennzeichnet, dass** der Druck über einen Kolben (7) oder eine Membran auf das Rückstellelement (6) wirkt.

5. Sicherheitseinrichtung nach einem oder mehreren der Ansprüche 1 bis 4, **dadurch gekennzeichnet, dass** das Rückstellelement (6) eine Feder ist.

6. Sicherheitseinrichtung nach einem oder mehreren der Ansprüche 1 bis 5, **dadurch gekennzeichnet, dass** das Sicherheitsventil (27) insbesondere im Normalbetrieb mittels eines Sicherheitsventilkolbens (2) betätigbar ist.

7. Luftaufbereitungsanlage für ein Fahrzeug mit einer Sicherheitseinrichtung nach einem oder mehreren der Ansprüche 1 bis 6.

8. Fahrzeug mit Luftaufbereitungsanlage nach Anspruch 7.

9. Verfahren zum Sicherheitsbetrieb einer Luftaufbereitungsanlage eines Fahrzeugs, wobei im Normalbetrieb die Komponenten Druckreglerventil (28), Regenerationsventil (26) und Kreisschutzeinrichtung (13) betätigbar sind und im Sicherheitsbetrieb wenigstens eines der Komponenten ausfällt, **dadurch gekennzeichnet, dass** im Sicherheitsbetrieb das Rückstellelement (6) des Sicherheitsventils (27) entlastet wird.

10. Verfahren nach Anspruch 9, **dadurch gekennzeichnet, dass** das Regenerationsventil (26) im Sicherheitsbetrieb abschaltet, wodurch die Rückseite (7a) eines auf das Rückstellelement (6) wirkenden Mittels (7) entlüftet wird.

## Claims

1. Safety device for a pneumatic system of a motor vehicle, in which a safety valve (27) incorporating a return element (6) with an adjustable return force is provided, **characterised in that** the return force of the return element (6) can be adjusted during operation of the pneumatic system.

2. Safety device as claimed in claim 1, **characterised in that** the return force of the return element (6) can be adjusted by means of a pressure and/or mechanically.

3. Safety device as claimed in claim 2, **characterised in that** the pressure can be adjusted via a regeneration valve (26).

4. Safety device as claimed in one or more of claims 1 to 3, **characterised in that** the pressure acts on the return element (6) via a piston (7) or a membrane.

5. Safety device as claimed in one or more of claims 1 to 4, **characterised in that** the return element (6) is a spring.

6. Safety device as claimed in one or more of claims 1 to 5, **characterised in that** the safety valve (27) can be operated by means of a safety valve piston (2), in particular during normal operation.

7. Pneumatic system for a motor vehicle with a safety device as claimed in one or more of claims 1 to 6.

8. Vehicle with a pneumatic system as claimed in claim 7.

9. Method of operating a pneumatic system of a motor vehicle in safety mode, whereby the components comprising pressure regulator valve (28), regeneration valve (26) and circuit protection system (13) can be operated during normal mode and in safety mode at least one of the components is out of operation, **characterised in that** in safety mode, the return element (6) of the safety valve (27) is relieved of pressure.

10. Method as claimed in claim 9, **characterised in that** the regeneration valve (26) is switched off during safety mode, as a result of which the rear end (7a) of a means (7) acting on the return element (6) is vented.

## Revendications

1. Dispositif de sécurité pour une installation de traitement d'air d'un véhicule automobile, une soupape (27) de sécurité étant prévue, qui comprend un élément (6) de rappel à force de rappel réglable, **caractérisé en ce que** la force de rappel de l'élément (6) de rappel est réglable pendant le fonctionnement de l'installation de traitement d'air.

2. Dispositif de sécurité suivant la revendication 1, **caractérisé en ce que** la force de rappel de l'élément (6) de rappel est réglable au moyen d'une pression et/ou mécaniquement.

3. Dispositif de sécurité suivant la revendication 2, **caractérisé en ce que** la pression est réglable au moyen d'une soupape (26) de régénération.

4. Dispositif de sécurité suivant une ou plusieurs des revendications 1 à 3, **caractérisé en ce que** la pression agit sur l'élément (6) de rappel par l'intermédiaire d'un piston (7) ou d'une membrane.

5. Dispositif de sécurité suivant une ou plusieurs des revendications 1 à 4, **caractérisé en ce que** l'élément (6) de rappel est un ressort.

6. Dispositif de sécurité suivant une ou plusieurs des revendications 1à 5, **caractérisé en ce que** la soupape (27) de sécurité peut être actionnée notamment pendant le fonctionnement normal au moyen d'un piston (2) de soupape de sécurité.

7. Installation de traitement d'air pour un véhicule automobile, pourvue d'un dispositif de sécurité suivant une ou plusieurs des revendications 1à 6.

8. Véhicule pourvu d'une installation de traitement d'air suivant la revendication 7.

9. Procédé pour le fonctionnement de sécurité d'une installation de traitement d'air d'un véhicule, les composants suivants - soupape (28) de régulateur de pression, soupape (26) de régénération et équipement (13) de protection de circuit - pouvant être actionnés pendant le fonctionnement normal et au moins un des composants étant défaillant pendant le fonctionnement de sécurité, **caractérisé en ce que** l'élément (6) de rappel de la soupape (27) de sécurité est déchargé pendant le fonctionnement de sécurité.

10. Procédé suivant la revendication 9, **caractérisé en ce que** la soupape (26) de régénération se désactive pendant le fonctionnement de sécurité, de sorte que le côté (7a) arrière d'un moyen (7) agissant sur l'élément (6) de rappel est mis à l'atmosphère.
